# EUROPEAN PATENT APPLICATION

(11) **EP 4 657 385 A1**
(43) Date of publication of application: **03.12.2025**
(21) Application number: 24386062.4
(22) Date of filing: 30.05.2024
(51) Int. Cl.: G06V 10/141, G06V 10/764, G06V 10/82, G06V 40/16

(54) **OPTOELECTRONIC SYSTEM AND METHOD FOR CAPTURING FACIAL EXPRESSIONS**

(71) Applicant: ams-OSRAM AG, 8141 Premstätten (AT)
(72) Inventor: Colzi, Giacomo, 8803 Rüschlikon (CH); Miguel Sánchez, Javier, 8046 Zürich (CH); D'Aleo, Francesco Paolo, 8833 Samstagern (CH); Katsikatsos, Giorgos, 8037 Zürich (CH)
(74) Representative: Epping - Hermann - Fischer

(57) **Abstract**

An optoelectronic system (1) for capturing facial expressions is provided. It comprises a sensor unit (10) configured to monitor a landmark point (92) of a face (90), wherein the sensor unit (10) comprises a laser light source (12) being configured to emit electromagnetic radiation towards the landmark point (92) and to undergo self-mixing interference, SMI, caused by reflection of the electromagnetic radiation from the landmark point (92), such that the sensor unit (10) generates a self-mixing interferometry signal based on the SMI of the laser light source (12). It further comprises a processing unit (14) configured to generate output data based on the self-mixing interferometry signal, wherein the output data (OD) is indicative of a position of the landmark point (92), and a modelling unit (20) configured to determine, based on the output data (OD), a scoring of facial muscles activation (SMA). Further, a host system for use with the optoelectronic system (1) and a method for capturing a facial expression is provided.

## Description

The present disclosure relates to an optoelectronic system for capturing facial expressions, a host system for use with such optoelectronic system, and a method for capturing facial expressions.

Currently, camera-based approaches are used for capturing facial expressions. Classification of micro- and macro-expressions can be done using data-driven methods and is subject to all the implications of collecting large datasets to ensure accuracy and population coverage.

At least one objective of certain embodiments is to provide an optoelectronic system and a method for capturing facial expressions which overcome the above-mentioned drawbacks and provide an efficient way to monitor landmark points of a target face.

An optoelectronic system for capturing facial expressions is provided.

According to at least one embodiment, the optoelectronic system comprises a sensor unit configured to monitor a landmark point of a face. The sensor unit comprises a laser light source being configured to emit electromagnetic radiation towards the landmark point and to undergo self-mixing interference, SMI, caused by reflection of the electromagnetic radiation from the landmark point, such that the sensor unit generates a self-mixing interferometry signal based on the SMI of the laser light source.

The face to be monitored may be a human face, or a face of another mammal. The face comprises a plurality of muscles that can perform a series of actions. Facial expressions are based on specific sets of actions that individual muscles or groups of muscles can perform. The landmark point of the face may be a region or location on the face skin surface. In particular, the landmark point of the face may be a location at which surface deformation and muscular tension and contraction can be observed. The landmark point on the face skin surface can correlate with (i.e. depend directly or indirectly from) specific individual or combined muscular actions. Examples of such landmark points might include a point on the face surface that is in proximity of an underlying muscle whose activity is monitored directly. Alternatively, examples include a remote location, such as the chin surface whose position and movement speed depend on jaw movements, and is an indirect indicator of remote muscles activation, such as the masseter muscle and others. For example, the landmark point may be in the vicinity of principal face muscles, such as the frontalis, temporalis, corrugator supercilia, procerus, nasalis, levator labii superioris, orbicularis oris, zygomaticus major, buccinator, masseter, risorius, and/or orbicularis oculi muscle.

The sensor unit may be arranged in proximity to the landmark point. In particular, a distance between the laser light source of the sensor unit and the landmark point may be in the centimeter range. This can mean that the sensor unit is located in a region around the face. For example, the sensor unit is integrated in a wearable, in particular head-mounted, device, as for example a helmet, a mask, or glasses.

The laser light source may be or may comprise a semiconductor laser diode and/or a resonant cavity light emitting device, such as a vertical cavity surface emitting laser, VCSEL. The laser light source may be called emitter in the following. The emitter may comprise a semiconductor substrate. The semiconductor substrate may, for example, be based on semiconductor materials such as In(Ga)N, In(Ga)AlP, (Al)GaAs, (In)GaAs. The emitter may be epitaxially grown in or on the semiconductor substrate. Electromagnetic radiation may be called light in the following. The laser light source may generate electromagnetic radiation in the wavelength range between infrared radiation and ultraviolet radiation. In particular, the laser light source can be configured to generate electromagnetic radiation in the wavelength range from at least 350 nm to at most 1100 nm, in particular in the wavelength range from at least 800 nm to at most 950 nm, during operation. Thus, the laser light source may emit electromagnetic radiation in the near-infrared, NIR, domain. For example, the laser light source is configured to generate a continuous emission or to emit light in a pulsed fashion.

The laser light source enables self-mixing interference. The laser light source may comprise a resonant cavity, into which at least a fraction of the light emitted by the laser light source can be reflected, or backscattered, from the landmark point. In other words, the laser light source emits, during operation, laser light towards the landmark point, where the laser light is at least partially reflected. The reflected light is then redirected back into the resonant cavity of the laser light source, where the reflected light mixes and interferes with the light waves. The SMI alters a property, e.g. a wavelength, of the emitted light. The SMI may cause a modulation in amplitude and/or frequency of the emitted light, hence generating periodic fringes in the output signal. The change in amplitude and/or frequency may form the self-mixing interferometry signal to be sensed. More accurately, SMI modulates the optical power which is usually observed by measuring the optical power directly. Another way to sense a change in the optical power is to detect a junction voltage or biasing current of the laser light source.

According to at least one embodiment, the optoelectronic system comprises a processing unit configured to generate output data based on the self-mixing interferometry signal, wherein the output data is indicative of a position of the landmark point.

The processing unit may read out the self-mixing interferometry signal, SMI signal, from the sensor unit. Thus, the processing unit may comprise readout circuitry and/or other electronic components, such as analog-to-digital converters. The processing unit may be integrated in the same substrate as the laser light source, or may be placed on a separate chip. The processing unit may be implemented in hardware. However, at least some functionalities of the processing unit may be implemented in software. The processing unit may be part of the sensor unit or may be associated with the sensor unit. In case that the optoelectronic system comprises a plurality of sensor units, each sensor unit may be assigned to a separate processing unit, or at least some sensor units may share a common processing unit. For example, based on the SMI signal from the sensor unit, a distance between the laser light source and the landmark point can be determined. Thus, position data of the landmark point can be inferred from the SMI signal. That the output data is indicative of the position of the landmark point can mean that the position data is comprised in the output data or that the position can be derived from the output data.. It is also possible that the output data includes additional information, such as a velocity of the landmark point, a duration and/or direction of movement of the landmark point, and/or a timestamp, or that such additional information is derivable from the output data.

According to at least one embodiment, the optoelectronic system comprises a modelling unit configured to determine, based on the output data, a scoring of facial muscles activation.

The modelling unit may be arranged on the same chip on which the sensor unit and/or the processing unit are arranged, or it may be placed on a separate chip. The modelling unit may be implemented in hardware and/or software. The modelling unit may be associated with the sensor unit or with a plurality of sensor units. The modelling unit receives the output data from the processing unit or from a plurality of processing units. Based on the output data, in particular the location of the landmark point, the modelling unit determines the scoring of facial muscles activation. For example, based on the output data, a face surface position can be determined in the three-dimensional (3D) space. By comparing the face surface position with a reference position, a deformation of the face can be identified. The deformation of the face may be caused by activation of one or more than one face muscles. The modelling unit may determine which and/or how many muscles contribute to the face deformation. Further, a strength of the displacement and movement of the landmark point can be translated into a strength of muscle activation. For example, the modelling unit comprises a preset artificial intelligence or neural network for analyzing the output data and identifying an activation of one face muscle or a group of face muscles. It is also possible that the modelling unit generates the scoring of facial muscles activation by involving a taxonomical classification model of facial muscles activation, such as the facial action coding system, FACS. FACS assigns an "action unit" (AU) to almost every visible movement of the mimic musculature. These are units that summarize a single or several muscle movements. Further, the strength of a movement may be expressed in the FACS by a five-stage ranking value. Thus, the modelling unit may assign the position data of the landmark point to an action unit of the FACS. The scoring of facial muscles activation may be referred to as static scoring in the following. The scoring of facial muscles activation may indicate which muscle, or which group of muscles, has caused the displacement/movement of the landmark point. Further, it may indicate the strength of the respective muscle activation.

According to at least one embodiment, an optoelectronic system for capturing facial expressions comprises a sensor unit configured to monitor a landmark point of a face, wherein the sensor unit comprises a laser light source being configured to emit electromagnetic radiation towards the landmark point and to undergo self-mixing interference, SMI, caused by reflection of the electromagnetic radiation from the landmark point, such that the sensor unit generates a self-mixing interferometry signal based on the SMI of the laser light source. It further comprises a processing unit configured to generate output data based on the self-mixing interferometry signal, wherein the output data is indicative of a position of the landmark point, and a modelling unit configured to determine, based on the output data, a scoring of facial muscles activation.

The described concept is based on the following technical considerations, among others:
SMI-based sensors are highly accurate and thus are well suited to monitor key locations of a target face for surface deformations and muscular tension. The proposed solution aims to precisely detect surface deformations of the face in key locations, with the additional advantage that the sensor unit can detect displacements even at a distance of a few centimeters, allowing to reduce the footprint of the system (for example, allowing thin frame glasses) and reducing the bulk of the system.

Compared with traditional measurement systems, SMI offers the advantages of lower cost and complexity thanks to the absence of further optical elements like beam splitters, objective lens assemblies, spectral filters that are typically used in cameras to reduce the effect of ambient light caused noise and saturation, or further photodetectors. This may allow to integrate such sensor units in head-mounted systems or helmets with additional sensors (e.g. eye and pupil tracking) to increase the detection and classification accuracy for emotional response. In comparison with camera-based approaches, SMI-based sensors may allow to reduce the power consumption and the amount of data that needs to be processed. Further, the data derived from SMI-based sensor units could correlate more closely with anatomical indicators, such as intensity scores of systems such as the Facial Action Coding System, FACS. Thus, SMI-based systems may allow to complement or even substitute camera-based approaches.

SMI-based sensors allow to monitor with high accuracy the position of landmark points within the face and thus local deformations of the face. These deformations may correspond or may correlate with a voluntary or involuntary response of a user. The optoelectronic system is capable to output quantitative scores that are relevant to the specific application. The velocity detection capabilities of SMI may further complement the data, providing additional inputs on the dynamics of the muscle activation, potentially increasing the accuracy and computation efficiency of the system. The proposed system can be used to detect micro-expressions of a subject. Micro-expressions are involuntary low-intensity facial expressions that can last for as little as 1/25th of a second. Technologies for micro-expression detection and interpretation are of interest for different applications, including, but not limited to, law enforcement and criminal investigation, medicine and psychology, especially doctor-patient communication, gauging pain levels in cognitively impaired patients, media, marketing, and business (monitoring prospective customer response to advertising stimuli or rating content), or driver safety. Further, capturing facial expressions (also in the context of FACS) may be extended to non-human species, e.g. in veterinary and animal cognition studies. In addition, the proposed optoelectronic system can be used for emotion recognition in human-robot interaction applications: Fast and accurate interpretations of facial expressions may result in decisions and actions that are harmonious in the user experience. Further, the optoelectronic system may allow robots to exhibit context-appropriate facial expressions which strongly affect the social interaction. Thus, human-robot interactions can be more efficient.

According to at least one embodiment, the optoelectronic system comprises a plurality of sensor units.

The above-described features of a single sensor unit also apply to the plurality of sensor units. In other words, the sensor units can have the same configuration. In particular, each sensor unit may comprise a laser light source that enables SMI to generate an SMI signal. Further, to each of the sensor units a respective processing unit can be assigned, in order to generate output data associated with the respective one of the sensor units. It is also possible that a common processing unit collects SMI signals of each sensor unit or a group of sensor units.

According to at least one embodiment, at least two of the sensor units are configured to monitor different landmark points of the face.

It is also possible that more than one sensor unit monitors the same landmark point/ muscle. A sensor unit of the plurality of sensor units can also indirectly monitor a muscle activity by monitoring a remote landmark point. Additionally, or alternatively, more than one sensor unit can monitor the same landmark point to better identify the face surface position in 3D space, or to probe the surface velocity on different axes.

According to at least one embodiment, the modelling unit is configured to determine the scoring of facial muscles activation based on a combination of output data derived by different sensor units.

Displacements and/or movements of different landmark points may relate to the activation of the same muscle, the same group of muscles, or it may relate to the activation of different muscles. Different muscles may also cause the same or similar displacement and/or movement of a respective landmark point. Since any landmark point displacement may be correlated to a multiplicity of underlying muscle actions, a multiplicity of landmark points can be monitored by the plurality of sensor units, in order to decouple the underlying muscle actions as much as possible in post-processing. In turn, for example, the modelling unit may assign output data of different sensor units to the same action unit according to FACS, or to different actions units. Thus, the modelling unit may generate an accurate scoring of muscle activation based on the output data of the plurality of sensor units.

According to at least one embodiment, the optoelectronic system further comprises a control unit configured to provide a synchronization signal to the plurality of sensor units.

Thus, the plurality of sensor units may be synchronized. This enables a temporal analysis of the output data of each sensor unit. Specifically, the output data can be linked to each other to reveal a correlation of displacements of different landmark points. The synchronization signal may also be provided to other sensor devices, as outlined below.

According to at least one embodiment, the optoelectronic system further comprises a modulation unit configured to provide a modulation signal to modulate the intensity and/or frequency of the emitted electromagnetic radiation.

For example, the laser emission wavelength can be modulated by ramping the laser current periodically, e.g. via a triangular function current ramp. Changing the laser current leads to a change in intensity of the emitted light, which automatically also leads to a change in the optical frequency. A continuously modulated emission of the laser light source can be generated. By modulating the intensity and/or the wavelength of the emitted laser light, an absolute distance of the landmark point to the laser light source and its velocity can be determined with SMI. In particular, the depth with regard to the sensor unit and the surface velocity component on the sensor unit - landmark point axis can be extracted. An exemplary working principle is that the frequency of the SMI signal in the rising part of a triangular modulation is different from the frequency in the falling part of the triangular modulation. The modulation unit may be configured to modulate the emitted electromagnetic radiation of each sensor unit comprised in the optoelectronic system. A post-processing may be applied to the SMI signals to subtract the modulation function and to demodulate the SMI signals. Other known relevant modulation protocols that can be used include the addition of constant wavelength segment to each period of the triangular modulation, generally used to better extract velocity values independent of position. Another option includes any of the above where the linear current ramps are modified by a nonlinear (e.g. polynomial) correction to the current input to ensure the linearity of the laser wavelength modulation.

According to at least one embodiment, the optoelectronic system further comprises at least one additional sensor device. In particular, the additional sensor device can be a depth sensor, an eye tracking sensor, a voice sensor, and/or a camera, for example.

The depth sensor can be, for example, a time-of-flight sensor, a stereovision sensor, or a structured light sensor. The voice sensor can be implemented as microphone. The camera can be positioned such that it captures the whole face.

According to at least one embodiment, the modelling unit is further configured to classify a facial expression based on the output data, and based on additional output data of the additional sensor device.

Thus, the sensor unit or the plurality of sensor units can be combined with the additional sensor device in a sensor-fusion manner. Merging the optoelectronic system with a voice sensor or speech recognition system, for example, may prevent the classification of facial expression to misinterpret speech articulation as expression-related muscular actions. As another example, classifying the facial expression can be supported by an input from an eye tracker module or an external camera module. A depth sensor can additionally measure the position of one or more landmark points.

In addition, or alternatively, the additional sensor device and the sensor unit(s) may interact with each other. In case of a voice sensor, the modelling unit can correlate a voice-based activation with the scoring of facial muscle activation to find whether a spoken sentence is truthful. It is also possible that the sensor units for face morphology detection acquire cues of speech articulation. Further, some of the sensor units, such as those for monitoring the nasal cavity or the buccal region, may be configured to produce an output based on audio frequency vibrations, contributing to a voice command recognition system. As another example, the processed data from the landmark monitoring sensor units is interpreted and translated into an emotional response, which can be correlated with the pupil response of the user, to provide more information for the emotional response interpretation. The classified facial expression can be correlated with an input from an eye tracker module or an external camera module, to interpret the arousal of interest for a specific item, or to interpret the level of appreciation of some media content.

According to at least one embodiment, the sensor unit further comprises a photodetector that is configured to sense a photocurrent as self-mixing interferometry signal.

The photodetector can be implemented as photodiode. The detector may be a silicon photodiode. For example, the photodetector is integrated in the substrate on which the laser light source is arranged. The laser light source and the photodetector may be aligned to each other. A portion of the laser light leaks towards the photodetector (e.g. through a semitransparent mirror of the laser light source). It is also possible that the photodetector is integrated in the layer stack of the laser light source. The photodetector can be configured to detect the optical power output of the laser light source. The optical power output is an optical property of the laser light source that changes as a result of the self-mixing interference. The self-mixing interference generates periodic fringes in the output signal which can be observed by the photodetector.

In addition, or alternatively, the sensor unit is configured to sense a junction voltage of the laser light source as self-mixing interferometry signal.

For example, the optoelectronic system comprises a voltage meter for detection of the junction voltage. The junction voltage is an electronic property of the laser light source which may change as a result of the SMI. In this case, the optoelectronic system can be free of a photodetector, and the complexity of the system is further reduced.

According to at least one embodiment, the processing unit is further configured to associate the output data with a timestamp.

If a plurality of processing units is assigned to respective sensor units, each processing unit may associate the output data of the respective sensor unit with a timestamp. By means of the timestamp, the output data, and thus the scoring of facial muscles activation, can be classified chronologically. Therefore, a sequence of muscle activation can be reconstructed. The output data can have a temporal resolution in the millisecond range.

According to at least one embodiment, the optoelectronic system further comprises a memory unit configured to store the output data, wherein the modelling unit is further configured to determine a dynamic scoring of facial muscles activation based on stored output data of a predefined time interval.

The memory unit can be arranged on the same chip as the modelling unit. The memory unit can be implemented as RAM memory. The memory unit may be configured to store the output data based on the timestamp associated with the output data, such that output data of different sensor units with the same timestamp can be combined with each other. Alternatively, the scoring of facial muscles activation derived from the output data is stored, and these static scoring instances are binned for a predefined time interval. By storing output data and/or static scoring instances of previous and current time steps or time intervals, an evolution of muscle activation can be analyzed. Thus, a dynamic scoring of facial muscles activation can be constructed.

According to at least one embodiment, the output data generated by the processing unit is further indicative of a velocity of the landmark point.

That the output data is indicative of the velocity can mean that velocity data is comprised in the output data, or that the velocity is derivable from the output data. The SMI-based sensor units can determine a velocity and a direction of movement of the monitored landmark points. In particular, it is possible to generate velocity data with SMI-based measurements if the emitted laser light is modulated, e.g. by the above-mentioned modulation unit. The velocity can be deduced from the Doppler frequency comprised in the SMI signal. The displacement of landmark points can be extrapolated using the velocity data. Further, the velocity data can be used to construct a dynamic scoring of facial muscles activation. Thus, the classification of the facial expression can be enriched by information on the dynamics.

According to at least one embodiment, the processing unit is further configured to transmit the output data to the modelling unit at a rate of at least 100 Hz.

The processing unit may be able to stream the output data with a sufficient rate to fully characterize muscular actions with durations less than 0.25 seconds (i.e. for micro-expressions). For instance, it can stream data with a rate equal to or more than 1 kHz.

According to at least one embodiment, the electromagnetic radiation emitted by the laser light source is in an invisible wavelength range, in particular in the (near-) infrared wavelength range. Advantageously, a user is not blinded by the electromagnetic radiation.

Further, a head-mounted device is provided. The head-mounted device employs the optoelectronic system. Thus, features disclosed for the optoelectronic system are also disclosed for the head-mounted device, and vice versa.

According to at least one embodiment, the optoelectronic system is at least partially integrated in the head-mounted device, such that one or more sensor units of the optoelectronic system are attached to or integrated in a frame of the head-mounted device.

For example, the head-mounted device is or comprises a helmet. Alternatively, the head-mounted device is or comprises glasses. The head-mounted device can also be a mask covering the face or the mouth. Further, the head-mounted device may be equipped with other components, like a display, or an eye tracker. The sensor units may be integrated in a frame of the display, or can be placed within the display. The sensor unit or the plurality of sensor units are arranged in or on the head-mounted device such that the landmark points of the face are in a field of view of the sensor unit(s).

Further, a host system for use with the optoelectronic system is provided. The host system may comprise the optoelectronic system or may interact with the optoelectronic system. Thus, features disclosed for the optoelectronic system are also disclosed for the host system, and vice versa.

According to at least one embodiment, the host system comprises an interacting device, wherein the interacting device is configured to provide content in response to the determined scoring of facial muscles activation or in response to a classified facial expression derived from the scoring.

For example, the host system is a portable device, a gaming console, or a computer. The interacting device can be a display, a screen, a projector, or a speaker, for example. The optoelectronic system may be connected to the host system or to the interacting device via a wired or wireless connection. For example, the modelling unit monitors the face for consciously controlled macro-expressions to animate an avatar shown on the screen. In another example, the determined scoring and/or classified facial expression is associated to an emotional response, which in turn is used to adapt content provided to the user, as for example advertisement.

In addition, or alternatively, the interacting device is configured to indicate the modelling unit to determine the scoring of facial muscles activation in response to a content provided by the interacting device.

For example, the scoring of facial muscles activation and/or the classified facial expression is combined with a scene captured by a world-facing camera of augmented reality glasses for advertisement or media evaluation. In particular, the classified facial expression can be used to interpret the level of appreciation of some media content.

Further, a method for capturing facial expressions is provided. The method can be a computer-implemented method. This means that at least some steps of the method can be implemented on a computer and/or carried out be a computer program product. In addition, the method can be carried out at least partially by the optoelectronic system described above. Thus, features disclosed for the optoelectronic system are also disclosed for the method for capturing facial expressions.

According to at least one embodiment of the method, the method comprises monitoring, by a sensor unit, a landmark point of a face, wherein the monitoring comprises emitting, by a laser light source of the sensor unit, electromagnetic radiation towards the landmark point, and performing self-mixing interference, SMI, caused by reflection of the electromagnetic radiation from the landmark point, thereby generating a self-mixing interferometry signal based on the SMI of the laser light source.

According to at least one embodiment, the method comprises generating, by a processing unit, output data based on the self-mixing interferometry signal, wherein the output data is indicative of a position of the landmark point.

According to at least one embodiment, the method comprises determining, by a modelling unit, a scoring of facial muscles activation based on the output data.

According to at least one embodiment, a method of capturing facial expressions comprises monitoring, by a sensor unit, a landmark point of a face, wherein the monitoring comprises emitting, by a laser light source of the sensor unit, electromagnetic radiation towards the landmark point, and performing self-mixing interference, SMI, caused by reflection of the electromagnetic radiation from the landmark point, thereby generating a self-mixing interferometry signal based on the SMI of the laser light source. It further comprises generating, by a processing unit, output data based on the self-mixing interferometry signal, wherein the output data is indicative of a position of the landmark point. It further comprises determining, by a modelling unit, a scoring of facial muscles activation based on the output data.

The technical considerations and advantages of the method are the same as the ones described above in context of the optoelectronic system.

According to at least one embodiment, the method further comprises classifying, by the modelling unit, a facial expression based on the scoring of facial muscles activation.

The method may comprise monitoring a plurality of landmark points by respective sensor units. Thus, position data and/or velocity data of more than one landmark point can be generated and evaluated to obtain scorings of facial muscles activation. By combining the plurality of data, a deformation of the face in the three-dimensional space can be identified, which in turn may translate into a facial expression. The classifying step may also consider the strength of the muscle activation, which may have caused an either small or large displacement of the landmark point.

According to at least one embodiment, classifying the facial expression is further based on a training set of data. In addition, or alternatively, classifying the facial expression is further based on a taxonomical classification model of facial muscles activation.

In the former case, classifying the facial expression may involve an artificial intelligence and/or neural network. Before the classifying, the artificial intelligence and/or neural network may have been trained with the training set of data. The training set of data may include different scoring data with different types of expression labels. The artificial intelligence and/or neural network may be trained to assign different scorings of facial muscles activation to different facial expressions. In the latter case, classifying the facial expression may involve a classification scheme such as FACS, which assigns muscle activation to different action units, and a combination of action units to specific facial expressions. For example, a displacement of a landmark point around the upper lip indicating a lift of the upper lip by the levator labii superioris muscle is assigned to an action unit "10". The taxonomical classification model can involve a series of threshold values and conditions. The output of the classifying step can be the
most probable facial expression, or a list of probabilities of facial expression. Additionally, the classifying step can be able to discern
facial expressions from other sources of face deformation, such as speech, optionally by integrating inputs from additional sensor devices.

According to at least one embodiment, the method further comprises generating a dynamic scoring of facial muscles activation.

As mentioned above, this may be achieved by binning static scoring instances for a given time interval, or it can be based on an extrapolation of landmark point displacements from the instantaneous velocity values, or a combination of both.

According to at least one embodiment, classifying the facial expression comprises distinguishing micro-expressions from macro-expressions by evaluating the dynamic scoring of facial muscles activation.

Micro-expressions are involuntary low-intensity facial expressions that can last for as little as 1/25^{th} of a second. By evaluating the dynamics, micro-expressions and macro-expressions can be discriminated. In an implementation of the method, micro-expressions are disrespected, and the face is monitored for voluntary macro-expressions, for example to control an avatar in a virtual reality setup. In another implementation, it is especially looked for micro-expressions to evaluate the true emotional response of a target subject.

According to at least one embodiment, the method further comprises generating, by the modelling unit, an interpretation output of interpreting the facial expression, wherein the interpretation output is based on the classified facial expression.

In other words, the modelling unit may produce an instantaneous emotional response interpretation, or analogously an interpretation based on the specific use case (for instance the probability that a specific statement is truthful). The interpretation output may be generated by integrating the data acquired by a multiplicity of sensor devices/ sensor units at the same time or labeled with the same timestamp, or can be based on the extracted and classified facial expression.

According to at least one embodiment, the interpretation output is further based on a further training set of data. In addition, or alternatively, the interpretation output is further based on threshold values of an interpretation scheme.

In the former case, generating an interpretation output may involve an artificial intelligence and/or neural network. The artificial intelligence and/or neural network may have been trained with the further training set of data. The further training set of data may include different data sets of facial expressions with different types of interpretation labels, in particular emotion labels. The artificial intelligence and/or neural network may be trained to assign different facial expressions to emotions. In the latter case, the modelling unit may interpret the emotional response based on an authoritative interpretation scheme that can be based on assumptions on the use case. For example, the interpretation scheme may be based on FACS. FACS assigns basic emotions such as anger, joy, sadness, disgust, contempt, fear and surprise to specific action units or groups of action units. For example, if action unit "6" (lifted cheeks), action unit "12" (lifted corners of the mouth) and action "42" (squinting the eyes) are involved in a facial expression, this may indicate the basic emotion joy. The step of generating the interpretation output may discern spontaneous expressions from controlled ones.

The following description of figures may further illustrate and explain aspects of the optoelectronic system for capturing facial expressions, the head-mounted device, the host system, and the method for capturing facial expressions. Components and parts of the optoelectronic system and steps of the method that are functionally identical or have an identical effect are denoted by identical reference symbols. Identical or effectively identical steps, components and parts might be described only with respect to the figures where they occur first. Their description is not necessarily repeated in successive figures.
Figure 1 shows an exemplary embodiment of an optoelectronic system for capturing facial expressions.
Figure 2 shows a head-mounted device with an integrated optoelectronic system according to an embodiment.
Figures 3a to 3c show examples of sensor units comprised in an optoelectronic system according to an embodiment.
Figure 4 shows another exemplary embodiment of an optoelectronic system.
Figure 5 schematically shows a host system interacting with an optoelectronic system according to an embodiment.
Figures 6 and 7 show exemplary embodiments of a method for capturing facial expressions.

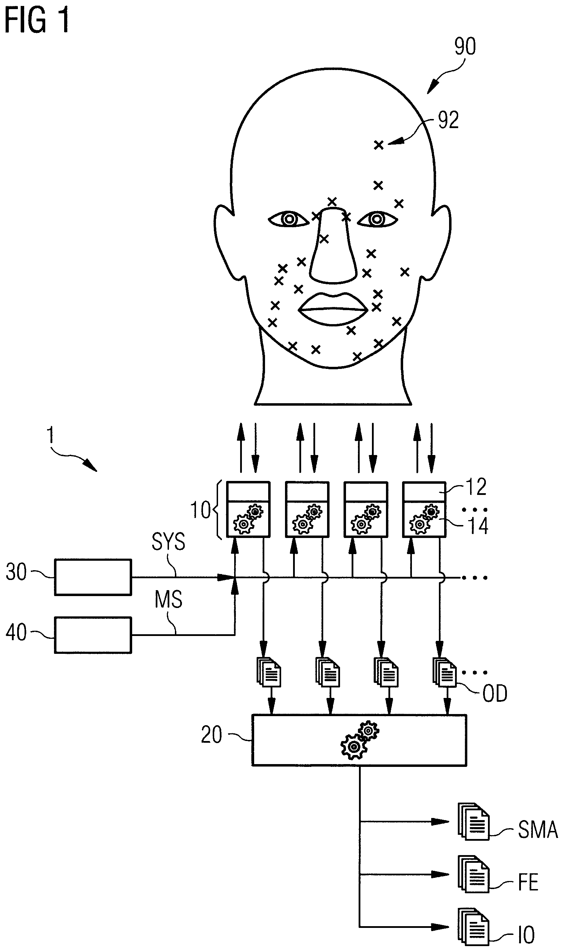

In Figure 1 an optoelectronic system 1 according to an embodiment is shown. The optoelectronic system is configured to capture facial expressions, in the shown example the facial expressions of a human face 90. A plurality of landmark points 92 are defined in the face 90. The landmark points may be characteristic locations or regions which are involved in one or more facial expressions. In particular, the landmark points 92 may be points on the face skin surface that correlate with specific muscular actions and that are in proximity to respective underlying muscles whose activities are monitored.

The optoelectronic system 1 for capturing facial expressions comprises a sensor unit 10 configured to monitor a landmark point 92 of the face 90. In the shown example, the optoelectronic system comprises a plurality of sensor units 10, wherein each sensor unit 10 may monitor a different landmark point 92, or wherein some sensor units 10 may monitor the same landmark point 92. Each sensor unit 10 comprises a laser light source 12 being configured to emit electromagnetic radiation towards a respective landmark point 92 and to undergo self-mixing interference, SMI, caused by reflection of the electromagnetic radiation from the landmark point 92. The electromagnetic radiation is illustrated by arrows pointing away from the laser light sources 12 and pointing towards them. Each sensor unit 10 generates a self-mixing interferometry signal based on the SMI of the laser light source 12.

Further, the optoelectronic system 1 comprises a processing unit 14. In the shown example, a processing unit is assigned to each of the laser light sources 12. The processing units 14 may be part of the respective sensor units 10. However, they may also be separate from the sensor units 10, and one processing unit may be shared by more than one laser light source in certain architectures. Each of the processing units 14 generates output data OD based on the self-mixing interferometry signal of the laser light source 12 to which the processing unit 14 is assigned. A distance between the landmark point 92 and the laser light source 12 can be inferred from the SMI signal. Thus, the output data OD is indicative of a position of the landmark point 92. However, the output data may be indicative of additional information, such as a velocity of the landmark point 92, or a direction of movement of the landmark point 92. By means of the output data OD a deformation of the face 90 can be determined, which may be formed by a combination of landmark point displacements.

Further, the optoelectronic system 1 comprises a modelling unit 20 configured to determine, based on the output data OD, a scoring of facial muscles activation SMA. The plurality of sensor units 10 with the associated processing units 14 may be connected to a common modelling unit 14. The scoring of facial muscles activation SMA may be a static scoring or dynamic scoring. This can mean that the scoring is based on output data of a single point in time, or is based on output data or scoring instances of a given time interval. In addition, information on the dynamics may also be obtained from velocity values of the landmark points derived from the SMI signals. The scoring of facial muscles activation SMA may indicate which muscles or which group of muscles are involved in a current deformation of the face 90. Further, the scoring of facial muscles activation SMA may also indicate a strength of the muscle activation.

Optionally and as shown in Figure 1, the optoelectronic system 1 comprises a control unit 30 configured to provide a synchronization signal SYS to the plurality of sensor units 10. Thus, the sensor units 10 can be controlled in synchronization. Also optionally, the optoelectronic system 1 comprises a modulation unit 40 configured to provide a modulation signal MS to modulate the intensity and/or frequency of the emitted electromagnetic radiation. The sensor units 10 may be connected to a common control unit 30 and to a common modulation unit 40.

In addition, the modelling unit 20 may generate further data output. For example, the modelling unit 20 extracts data about a facial expression FE based on the scoring SMA. This can mean that the modelling unit 20 classifies a facial expression FE based on the scoring of facial muscles activation SMA. The classification may further be based on a training set of data, and/or a taxonomical classification model of facial muscles activation, as for example the facial action coding system, FACS. This can mean that the scoring of facial muscle activation SMA is mapped to the FACS, which assigns an "action unit", AU, to visible movements of the facial musculature, wherein the strength of a movement may be expressed by a ranking value. In addition, the modelling unit 20 may output an interpretation output IO, which may provide an interpretation of the facial expression FE. For example, the interpretation output IO may correspond to an interpretation according to FACS, wherein basic emotions like anger and joy are assigned to specific action units within the face 90.

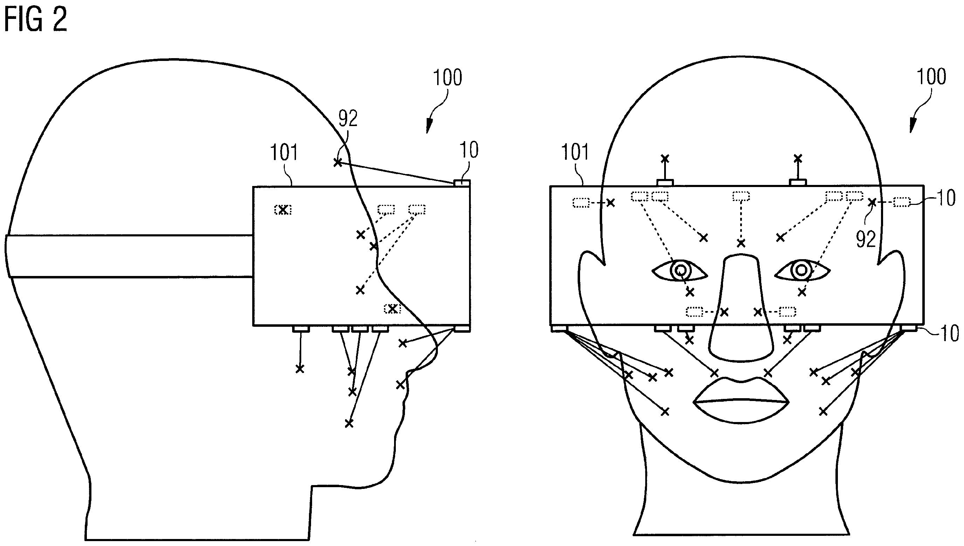

Figure 2 shows a side view and a front view of an illustrative example of a head-mounted device 100, in which the optoelectronic system 1 can be integrated. For example, the head-mounted device 100 can be VR/AR headset, or the like. The sensor units 10 are configured to monitor at least some of the principal face muscles located above the lip height.

The sensor units 10 can be attached to a frame 101 of the head-mounted device 100, as shown by filled boxes. In addition, some sensor units 10 can be integrated in the glasses of the head-mounted device 100, as shown by dashed boxes. The solid and dashed lines represent laser beams of the respective laser light sources 12 comprised in the sensor units 10 pointing to the landmarks 92 of the face 90. The layout of sensor units 10 and face landmark points 92 is outlined for illustrative purposes only. Here, for illustrative purpose, one sensor unit 10 monitors directly the deformation at one muscle, as for example the frontalis or temporalis muscle. More sensor units 10 could monitor the same muscle as well as one sensor unit 10 could monitor indirectly the muscle activity by looking at a remote landmark point. Additionally, or alternatively, more sensor units 10 can monitor the same landmark point 92 to better identify the face surface position in 3D space or to probe the surface velocity on different axes. Alternatively, as any landmark location displacement may be correlated to a multiplicity of underlying actions, a multiplicity of landmark locations can be monitored by a multiplicity of sensor units 10, in order to decouple the underlying actions as much as possible in post-processing. Different embodiments of the head-mounted device 100 may include helmets, full face masks, mouth masks, and thin frame glasses. The landmark points may be selected based on the application and can be different compared to the ones represented here. The subject may be not human (for instance, a different mammal).

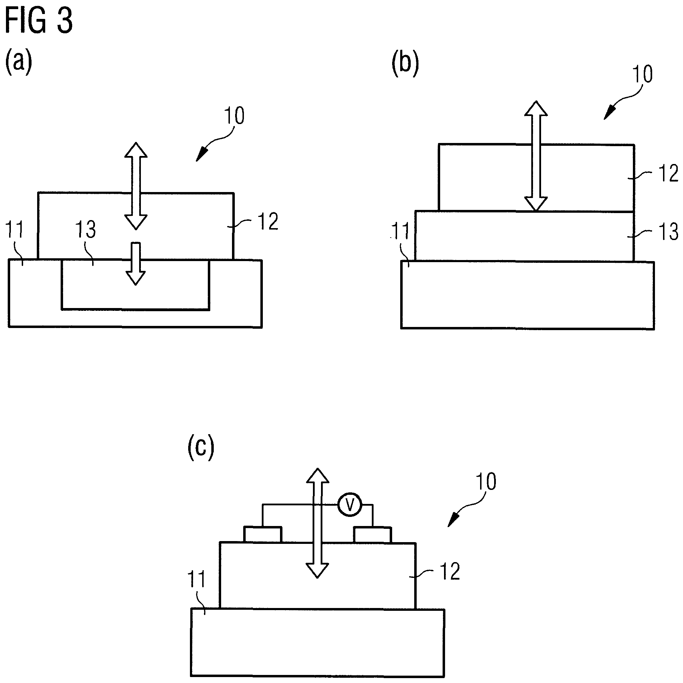

In Figures 3(a) to 3(c) different setups for the sensor unit 10 are shown. The sensor unit according to Figure 3(a) comprises a laser light source 12, in particular a surface emitting laser with a resonant cavity, arranged on carrier 11, which can be a semiconductor substrate 11. For example, the laser structure is epitaxially grown on the substrate 11. It is however also possible that the laser light source 12 is mounted on the carrier 11. A photodetector 13 is integrated in the substrate 11. The photodetector is configured to sense a photocurrent as self-mixing interferometry signal. This can mean that a fraction of the laser light leaks towards the photodetector, where an intensity modulation caused by the SMI can be sensed. In the example of Figure 3(b), the photodetector 13 is not integrated in the carrier 11 but is integrally formed with the laser light source 12. For example, the photodetector 13 is part of the layer stack forming the laser light source 12. In the example according to Figure 3(c), the sensor unit 10 does not comprise a photodetector. Instead, the sensor unit 10 is configured to sense a junction voltage V of the laser light source 12 as self-mixing interferometry signal. For each of the outlined sensor units, an optical element (e.g. a lens) configured to collimate the laser light or to focus it at a finite distance (e.g. at the target landmark point skin surface) might be included. Other elements may include polarizer elements. Other elements may include prisms or similar elements configured to steer the light emission direction of the sensor unit.

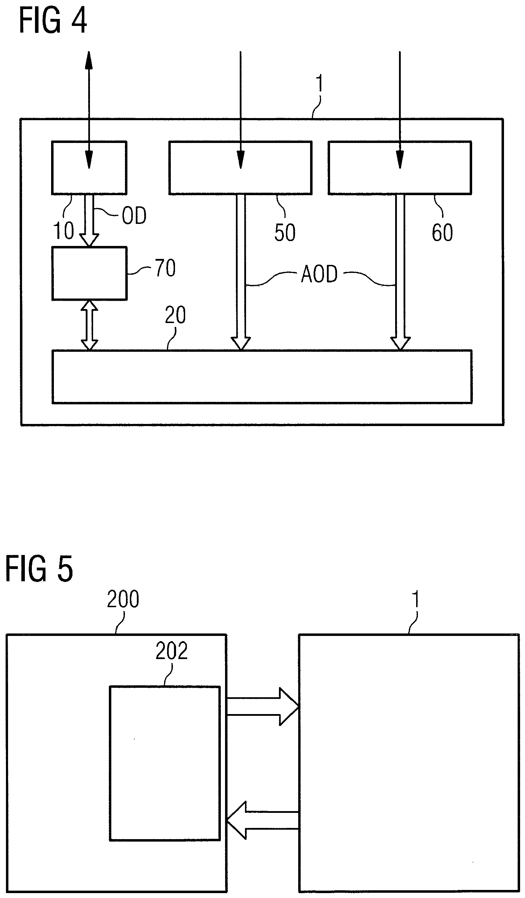

With Figure 4 a further embodiment of the optoelectronic system 1 is shown schematically. The optoelectronic system 1 comprises the sensor unit 10 and the modelling unit 20. It further comprises a first additional sensor device 50 and a second additional sensor device 60. For example, the additional sensor devices 50, 60 are or comprise a depth sensor, an eye tracking sensor, a voice sensor, and/or a camera. The optoelectronic system 1 may comprise only one or more than one of such sensor devices. The modelling unit 20 is also connected to the additional sensor devices 50, 60. The modelling unit 20 is configured to classify a facial expression FE based on the output data OD from the sensor unit 10 and based on additional output data AOD of the additional sensor devices 50, 60. The additional output data AOD from the depth sensor, the eye tracking sensor, the voice sensor, and/or the camera may help to identify the facial expression FE. The embodiment according to Figure 4 further comprises a memory unit 70 arranged between the sensor unit 10 and the modelling unit 20. The memory unit 70 is configured to store the output data OD. For example, the output data OD is stored in the memory unit 70 according to a timestamp associated with the output data OD. The modelling unit 20 may be configured to determine a dynamic scoring of facial muscles activation DSMA based on stored output data OD of a predefined time interval or based on static scoring instances stored in the memory unit 70.

Figure 5 schematically shows a host system 200 with an interacting device 202. The optoelectronic system 1 may be part of the host system 200 or may interact with the host system 200 or with the interacting device 202 comprised in the host system 200. In particular, the interacting device 202 may be configured to provide content in response to the determined scoring of facial muscles activation SMA or in response to a classified facial expression FE derived from the scoring SMA. For example, the interacting device 202 is or comprises a screen, a projector, or a speaker. For example, if it is determined, based on the facial expression, that a user appreciates the provided content, more of such content or similar content is provided. In another example, the facial expression of a user is mirrored using an avatar on the screen. Additionally, or alternatively, the interacting device 202 is configured to indicate the modelling unit 20 to determine the scoring of facial muscles activation SMA in response to a content provided by the interacting device 202. For example, the modelling unit 20 is instructed to determine the scoring of facial muscles activation SMA to measure the level of appreciation, rejection and/or surprise with respect to a provided content.

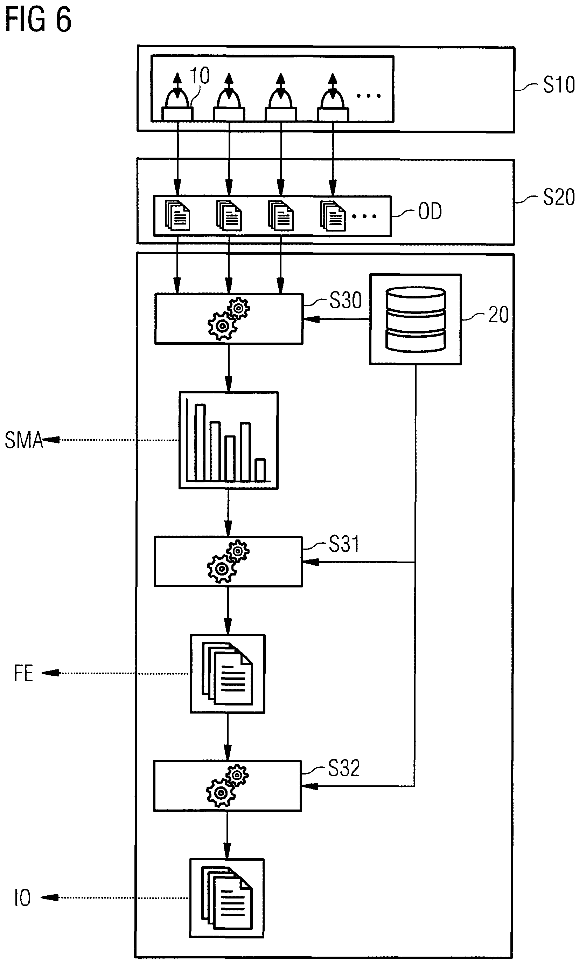

In Figure 6 a method for capturing facial expressions is shown schematically. The method comprises the following steps which are not necessarily carried out in this order but can be carried out in this order.

In a first step S10, a landmark point 92 of a face 90 is monitored by a sensor unit 10. The monitoring step S10 comprises emitting, by a laser light source 12 of the sensor unit 10, electromagnetic radiation towards the landmark point 92, and performing self-mixing interference, SMI, caused by reflection of the electromagnetic radiation from the landmark point 92, thereby generating a self-mixing interferometry signal based on the SMI of the laser light source 12.

In a second step S20, output data OD is generated by a processing unit 14 based on the self-mixing interferometry signal, wherein the output data OD is indicative of a position of the landmark point 92. The processing unit 14 may be comprised in the sensor unit 10. Thus, the first step S10 and the second step S20 may be carried out by the same component. It is however also possible that the processing unit 14 is separate from the sensor unit 10. In another example, the processing unit is incorporated in the modelling unit 20 and may be shared between different sensors units. In another example, part of the processing (for example, extracting the frequency spectrum of the SMI modulation) is carried out by the processing unit 14, and the following steps (for example peaks identification, and obtaining distance and velocity values) can be carried out in a separated unit, for example embedded in the modelling unit 20.

The following steps S30 to S32 may be carried out by a modelling unit 20. The modelling unit 20 may be implemented in hardware. For example, the modelling unit may be or may comprise a data processing apparatus comprising means for carrying out the method steps S30 to S32. The modelling unit 20 may also be implemented in software. In particular, the modelling unit 20 may be or may comprise a computer program product or a computer-readable storage medium having stored thereon a computer program.

In step S30, a scoring of facial muscles activation SMA is determined. The scoring of facial muscles activation SMA is determined by the modelling unit 20 based on the output data OD. This can mean that a quantitative scoring of facial muscles activation SMA, FACS action units, and/or analogous features based on the position and/or velocity of the landmark points 92 is derived. For instance, the modelling unit 20 provides a model that corresponds to a weighting factor to be applied to displacements based on face muscles anatomy, or that is based on the difference to a calibrated point map of the user face neutral expression. It is possible that the displacement values corresponding of some of the selected landmark points are correlated with more than one action unit or facial muscle activation feature, and at the same time, more than one landmark point correlates with the same group of action units or facial muscle activation scoring SMA. In such instances the acquired data from each sensor unit contains a mixture of different action units or facial muscle activation scoring SMA. In those cases, the model may include or be a linear model configured to remove the correlations between data from the landmark points to extract the scoring values in terms of action unit or facial muscle activation values, for example comparing data acquired from different landmark points that correlate with the same group of action units. The model can be a model based on training data. For instance, the model comprises aggregated indexes, such as quantities indicating local or global symmetry of the expression. It is understood that the SMI modulation frequency spectra and its related properties (e.g. modulation peaks frequency values) contain the all the information to determine the position (distance) and velocity of the landmark points relative to the sensor, therefore any processing step, input or output where reference is made to the latter quantities can equivalently refer to the former. For instance, in some embodiments the modulation frequency spectra and their properties can be used directly by the modelling unit 20, without the need of computing the corresponding position and velocity values.

In an optional step S31, a facial expression FE is classified. The modelling unit 20 classifies the facial expression FE based on the scoring of facial muscles activation SMA determined in the previous step S30. Classifying the facial expression may further be based on a training set of data, and/or a taxonomical classification model of facial muscles activation, such as FACS. The facial expression FE may be classified based on identified features. The corresponding model can be, for instance, a series of threshold values and conditions, and/or it can be based on a training set of data. The output of step S31 can be the most probable facial expression FE, or a list of probabilities. Additionally, step S31 can be able to discern facial expressions FE from other sources of face deformation, such as speech. Optionally, step S31 integrates input from additional sensor devices, such as depth sensors, voice sensors, cameras or the like.

In an optional step S32, an interpretation output IO of interpreting the facial expression FE is generated. The modelling unit 20 generates the interpretation output IO based on the classified facial expression FE determined in the previous step S31. Generating the interpretation output IO may further be based on a further training set of data, and/or on threshold values of an interpretation scheme. Step 32 may involve inputs from other sensor devices in the optoelectronic system 1. For instance, the interpretation output is correlated with a voice-based activation to find whether a spoken sentence is truthful. As another example, the interpretation output IO uses inputs from an eye tracker module and/or an external camera module to interpret the arousal of interest for a specific item, or to interpret the level of appreciation to some media content. The corresponding model can be, for instance, based on a further set of training data, or on threshold values based on the specific application. For instance, step S32 includes distinguishing spontaneous facial expressions (micro-expressions) from controlled ones (macro-expressions).

Any of the above-mentioned outputs, i.e. scoring of facial muscles activation SMA, data about the facial expression FE, and interpretation output IO, can be provided as inputs to a host system 200. A subset of steps S30 to S32 can be performed if some outputs are not required. For example, in a possible social media/consumer application the scoring of facial muscles activation SMA can be used to animate an avatar. The interpretation output IO could be used to dynamically animate a background and/or a scene lighting to reflect the interpreted mood of the user.

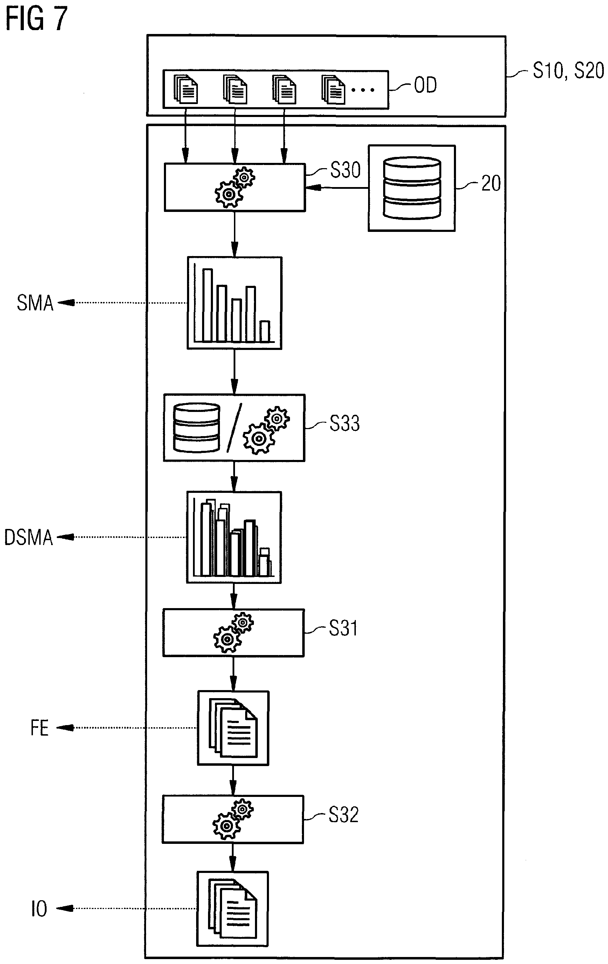

With Figure 7 a further method for capturing facial expressions is shown schematically. Steps S10 and S20 are merged for the sake of simplicity. The method according to Figure 7 is different from the method according to Figure 6 in that the method further comprises an optional step S33 of generating a dynamic scoring of facial muscles activation DSMA. Generating the dynamic scoring of facial muscles activation DSMA can comprise binning static scoring instances for a given time interval and store such data in a memory buffer. In addition, or alternatively, it can be based on an extrapolation of landmark point displacements from the instantaneous velocity data.

In this case, the step S31 of classifying the facial expression may comprise distinguishing micro-expressions from macro-expressions by evaluating the dynamic scoring of facial muscles activation DSMA. Monitoring the dynamics may offer some additional cues on whether a facial expression is spontaneous or controlled by the user.

The embodiments disclosed herein have been discussed for the purpose of familiarizing the reader with novel aspects of the idea. Although preferred embodiments have been shown and described, many changes, modifications, equivalents, and substitutions of the disclosed concepts may be made by one having skill in the art without unnecessarily departing from the scope of the claims.

It will be appreciated that the disclosure is not limited to the disclosed embodiments and to what has been particularly shown and described hereinabove. Rather, features recited in separate dependent claims or in the description may advantageously be combined. Furthermore, the scope of the disclosure includes those variations and modifications, which will be apparent to those skilled in the art and fall within the scope of the appended claims.

The term "comprising", insofar it was used in the claims or in the description, does not exclude other elements or steps of a corresponding feature or procedure. In case that the terms "a" or "an" were used in conjunction with features, they do not exclude a plurality of such features. Moreover, any reference signs in the claims should not be construed as limiting the scope.

### References

- 1: optoelectronic system
- 10: sensor unit
- 11: carrier/ substrate
- 12: laser light source
- 13: photodetector
- 14: processing unit
- 20: modelling unit
- 30: control unit
- 40: modulation unit
- 50: additional sensor device
- 60: further additional sensor device
- 70: memory unit
- 90: face
- 92: landmark point
- 100: head-mounted device
- 101: frame
- 200: host system
- 202: interacting device
- AOD: additional output data
- FE: facial expression data
- IO: interpretation output
- MS: modulation signal
- OD: output data
- SMA: scoring of facial muscles activation
- SYS: synchronization signal
- S10-S33: steps

## Claims

1. An optoelectronic system (1) for capturing facial expressions, comprising:
- a sensor unit (10) configured to monitor a landmark point (92) of a face (90), wherein the sensor unit (10) comprises a laser light source (12) being configured to emit electromagnetic radiation towards the landmark point (92) and to undergo self-mixing interference, SMI, caused by reflection of the electromagnetic radiation from the landmark point (92), such that the sensor unit (10) generates a self-mixing interferometry signal based on the SMI of the laser light source (12),
- a processing unit (14) configured to generate output data based on the self-mixing interferometry signal, wherein the output data (OD) is indicative of a position of the landmark point (92), and
- a modelling unit (20) configured to determine, based on the output data (OD), a scoring of facial muscles activation (SMA).

2. The optoelectronic system (1) according to the preceding claim, wherein the optoelectronic system (1) comprises a plurality of sensor units (10), at least two of the sensor units (10) being configured to monitor different landmark points (92) of the face (90), and wherein the modelling unit (20) is configured to determine the scoring of facial muscles activation (SMA) based on a combination of output data (OD) derived by different sensor units (10).

3. The optoelectronic system (1) according to the preceding claim, further comprising a control unit (30) configured to provide a synchronization signal (SYS) to the plurality of sensor units (10).

4. The optoelectronic system (1) according to one of the preceding claims, further comprising a modulation unit (40) configured to provide a modulation signal (MS) to modulate the intensity and/or frequency of the emitted electromagnetic radiation.

5. The optoelectronic system (1) according to one of the preceding claims, further comprising at least one additional sensor device (50, 60), in particular a depth sensor, an eye tracking sensor, a voice sensor, and/or a camera, wherein the modelling unit (20) is further configured to classify a facial expression (FE) based on the output data (OD) and based on additional output data (AOD) of the additional sensor device (50, 60).

6. The optoelectronic system (1) according to one of the preceding claims, wherein the sensor unit (10) further comprises a photodetector (13) that is configured to sense a photocurrent as self-mixing interferometry signal; or wherein the sensor unit (10) is configured to sense a junction voltage of the laser light source (12) as self-mixing interferometry signal.

7. The optoelectronic system (1) according to one of the preceding claims, wherein the processing unit (14) is further configured to associate the output data (OD) with a timestamp.

8. The optoelectronic system (1) according to one of the preceding claims, further comprising a memory unit (70) configured to store the output data (OD), wherein the modelling unit (20) is further configured to determine a dynamic scoring of facial muscles activation (DSMA) based on stored output data (OD) of a predefined time interval.

9. The optoelectronic system (1) according to one of the preceding claims, wherein the output data (OD) generated by the processing unit (14) is further indicative of a velocity of the landmark point (92).

10. The optoelectronic system (1) according to one of the preceding claims, wherein the processing unit (14) is further configured to transmit the output data (OD) to the modelling unit (20) at a rate of at least 100 Hz.

11. The optoelectronic system (1) according to one of the preceding claims, wherein the electromagnetic radiation emitted by the laser light source (12) is in an invisible wavelength range, in particular in the infrared wavelength range.

12. The optoelectronic system (1) according to one of the preceding claims, wherein the optoelectronic system (1) is at least partially integrated in a head-mounted device (100), such that one or more sensor units (10) of the optoelectronic system (1) are attached to or integrated in a frame (101) of the head-mounted device (100).

13. A host system (200) for use with the optoelectronic system (1) according to one of claims 1 to 12, the host system (200) comprising an interacting device (202), wherein the interacting device (202) is configured to
- provide content in response to the determined scoring of facial muscles activation (SMA) or in response to a classified facial expression (FE) derived from the scoring (SMA), and/or
- indicate the modelling unit (20) to determine the scoring of facial muscles activation (SMA) in response to a content provided by the interacting device (202).

14. A method for capturing facial expressions, the method comprising:
- monitoring (S10), by a sensor unit (10), a landmark point (92) of a face (90), wherein the monitoring (S10) comprises emitting, by a laser light source (12) of the sensor unit (10), electromagnetic radiation towards the landmark point (92), and performing self-mixing interference, SMI, caused by reflection of the electromagnetic radiation from the landmark point (92), thereby generating a self-mixing interferometry signal based on the SMI of the laser light source (12), and
- generating (S20), by a processing unit (14), output data (OD) based on the self-mixing interferometry signal, wherein the output data (OD) is indicative of a position of the landmark point (92), and
- determining (S30), by a modelling unit (20), a scoring of facial muscles activation (SMA) based on the output data (OD) .

15. The method according to the preceding claim, further comprising classifying (S31), by the modelling unit (20), a facial expression (FE) based on the scoring of facial muscles activation (SMA), and further based on a training set of data, and/or a taxonomical classification model of facial muscles activation.

16. The method according to the preceding claim, further comprising generating (S33) a dynamic scoring of facial muscles activation (DSMA), and wherein classifying (S31) the facial expression comprises distinguishing micro-expressions from macro-expressions by evaluating the dynamic scoring of facial muscles activation (DSMA).

17. The method according to claim 15 or 16, further comprising generating (S32), by the modelling unit (20), an interpretation output (IO) of interpreting the facial expression (FE), wherein the interpretation output (IO) is based on the classified facial expression (FE), and is further based on a further training set of data, and/or on threshold values of an interpretation scheme.
